# EUROPEAN PATENT APPLICATION

(11) **EP 2 854 024 A1**
(43) Date of publication of application: **01.04.2015**
(21) Application number: 13186368.0
(22) Date of filing: 27.09.2013
(51) Int. Cl.: G06F 3/14

(54) **Display panel suitable for use in human-machine interface devices**

(71) Applicant: Siemens Aktiengesellschaft, 80333 München (DE)
(72) Inventor: Diwakar, Rajendran, 5600078 Bangalore (IN); Jayaramaiah, Shilpa, 560085 Bangalore (IN)

(57) **Abstract**

The present invention discloses a display panel suitable for use in a human-machine interface device. The human-machine interface device includes a main processing unit and a display panel. The display panel includes a plurality of display units. The plurality of display units being interconnected through flexi-grid interfaces provided therein such that a virtual communication bus spanning the plurality of display units is established. The virtual communication bus is adapted to enable transfer of an output data signal from the main processing unit to the display units; and further to enable transfer of an input data signal received from the display units to the main processing unit.

## Description

The present invention generally relates to display panels and more particularly, to a display panels adapted for use in human-machine interface devices.

Display panels are ubiquitous in modern day world. Display panels are almost always a part of various kinds of computational devices as means for visual output to a user thereof. Various examples of such computational devices include but are not limited to, personal computers, mobile phones, and so on. One specific example of such display panels based device is a human-machine interface device as used in various industrial applications. In recent times, various human-machine interface devices are provided with touch sensitive display panels such that an operator is able to provide touch-based user inputs through the display panel.

In accordance with various state of the art techniques, the size of the display panel is not customizable based on user requirements. In general, the human-machine interface device may be capable of rendering graphical information on much bigger sized display panels. This potential of the human-machine interface device is not completely harnessed due to size limitations of the display panels provided therewith. The choice of screen size of the human-machine interface device imposes rigid constraints which are not addressable in any manner but with significant capital expenditure in replacing an already installed human-machine interface device with a new one with a bigger screen size of the display panel.

It is therefore an object of the present invention to provide a display panel suitable for use with a human-machine interface device.

The object is achieved by providing a display panel according to claim 1 and a human-machine interface device based thereon according to claim 8. Further embodiments of the present invention are addressed in the dependent claims.

The underlying concept of the present invention is to provide multiple display units which are configured to be connectable to each other as well as to a human-machine interface device such as to establish a virtual communication bus which facilitates communication of input and output signals between the display panel and the human-machine interface device. According to various embodiments of the present invention, the display panel of the present invention may be used to achieve a desired display size in legacy installations as well as new installations. While the integrated display panel in the human-machine interface device becomes redundant in legacy installations, a customized human-machine interface device devoid of an integrated display panel may be used in new installations.

In a first aspect of the present invention, a display panel suitable for use with a human-machine interface device is provided. The display panel comprises a plurality of display units. The plurality of display units comprises at least a first display unit and at least a second display unit. Each display unit comprises a plurality of flexi-grid interfaces, wherein the first and the second display units are operationally coupled through the flexi-grid interface such that a virtual communication bus spanning the plurality of display units is established. The virtual communication bus is adapted to enable transfer of an output data signal from the human-machine interface device to the first and the second display units; and further to enable transfer of an input data signal received from each of the first and the second display units to the human-machine interface device.

In a second aspect of the present invention, a human-machine interface device is provided. The human-machine interface device comprises a main processing unit and a display panel. The main processing unit is configured for generating one or more output data signals and further configured for receiving one or more input data signals. The display panel comprises a plurality of display units. The plurality of display units comprises at least a first display unit and at least a second display unit. Each display unit comprises a plurality of flexi-grid interfaces, wherein the first and the second display units are operationally coupled through the flexi-grid interface such that a virtual communication bus spanning the plurality of display units is established. The virtual communication bus is adapted to enable transfer of the output data signal from the main processing unit to the first and the second display units; and further to enable transfer of the input data signal received from each of the first and the second display units to the main processing unit.

Accordingly, the present invention provides a display panel suitable for use with a human-machine interface device such that display size can be increased or decreased as required without incurring any substantial costs.

The present invention is further described hereinafter with reference to illustrated embodiments shown in the accompanying drawings, in which:
- FIG 1: illustrates a schematic view of a human-machine interface device in accordance with an embodiment of the present invention,
- FIG 2: illustrates a schematic view of an individual display unit in accordance with an embodiment of the present invention,
- FIG 3: illustrates a schematic view of a flexi-grid interface provided on individual display units in accordance with an embodiment of the present invention,
- FIG 4: illustrates a schematic view of an auto configuration of display panel in accordance with an embodiment of the present invention,
- FIGS 5A-5B: illustrate a schematic view of a manual configuration of display panel in accordance with an embodiment of the present invention,
- FIGS 6A-6B: illustrate a schematic view of alternative arrangements of a given set of display units in accordance with an embodiment of the present invention,
- FIG 7: illustrates an exemplary view of a display panel configured using a legacy configuration system in accordance with an embodiment of the present invention, and
- FIG 8: illustrates an exemplary view of a display panel configured using a transformation-enabled configuration system in accordance with an embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

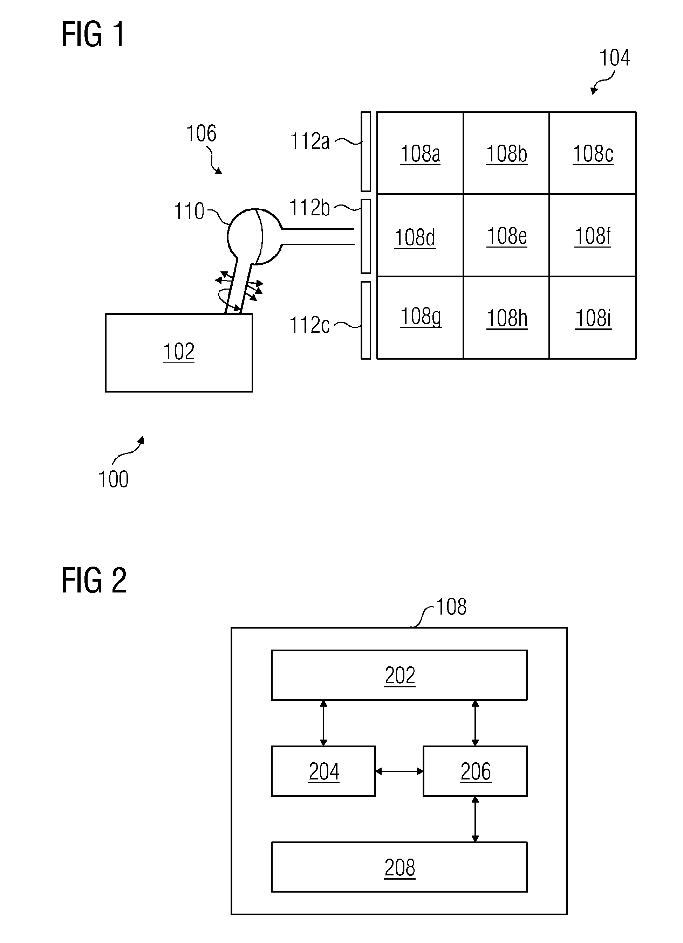

Referring to FIG 1, a schematic view of a human-machine interface device 100 is shown in accordance with an embodiment of the present invention.

The human-machine interface device 100 includes an main processing unit 102, a display panel 104, and mounting means 106. The display panel 104 includes display units 108a through 108i. The mounting means 106 include a flexi-joint 110 and a supporting frame 112.

The main processing unit 102 is configured for generating one or more output data signals and is further configured for receiving one or more input data signals. It should be noted that while the present invention envisages the main processing unit 102 devoid of any display capabilities, any desirable input/output features may be provided thereto. In particular, when the present invention is used for upgrading legacy systems, a legacy human-machine interface device will serve as the main processing unit 102 of the present invention. In this case, the integrated display panel provided on the legacy human-machine interface device may simply be switched-off or by-passed. The present invention will hereinafter be explained with reference to dedicated main processing unit 102. However, it should be understood that in case of retro-fitting the present invention in an already installed set-up, the legacy human-machine interface device will act as the main processing unit 102 according to the techniques of the present invention.

As evident from the adjoining figure, the display panel 104 includes multiple display units 108. Although the adjoining figure depicts that the display panel 104 includes nine display units 108, it is intended only for exemplary purposes and should not be construed to limit the present invention in any manner whatsoever. In general, any number of display units 108 may be used. In a typical implementation of the present invention at least a first display unit 108 and at least a second display unit 108 are provided. Such display units 108 are interconnected to form the display panel 104. As will be readily apparent from the foregoing description, any number of display units 108 may be interconnected to achieve a desired display size of the display panel 104.

The display panel 104 is physically mounted on any suitable surface using the mounting means 106. As stated earlier, the mounting means 106 include the flexi-joint 110 and the supporting frame 112. The flexi-joint 110 is similar to a ball-and-socket joint and enables positioning of the display panel 104 in a desirable viewing angle depending on user preference. As per the techniques of the present invention, supporting frame 112 is modular in design. Thus, individual frame pieces 112a, 112b, and so on, are mechanically coupled to generate the supporting frame 112.

FIG 2 illustrates a schematic view of an individual display unit 108 in accordance with an embodiment of the present invention.

The display unit 108 includes a touch-sensitive display surface 202, a video random-access memory 204, and a display controller 206.

The touch-sensitive display surface 202 is configured for not only rendering an output data in the form of graphical display to a user of the human-machine interface device 100 but also receiving an input data based on user interaction with the touch sensitive surface thereof. It should be noted that in various exemplary embodiment of the present invention, conventional hard-button may also be provided on individual display units 108 to receive user inputs.

The video random-access memory 204 stores frame-buffer data to be rendered onto the touch-sensitive display surface 202.

The display controller 206 receives the frame-buffer data from the main processing unit 102, and stores the frame-buffer data in the video random-access memory 204.

In an exemplary embodiment of the present invention, the display controller 206 in each display unit 108 is configured for determining a set of display coordinates corresponding thereto relative to the display panel 104. Furthermore, the display controller 206 in each display unit 108 is configured for providing information related to the set of display coordinates to the main processing unit 102.

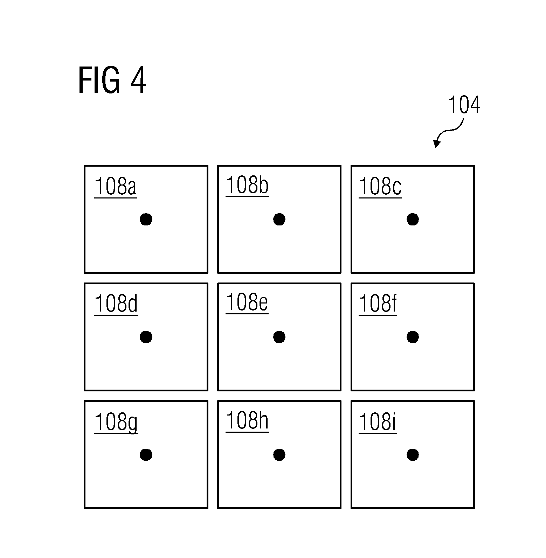

In an exemplary embodiment of the present invention, the display unit 108 further includes an orientation sensor 208. The orientation sensor 208 plays an important role in configuration of display panel 104 as will be explained later in conjunction with FIG 4.

The main processing unit 102 is configured for generating frame-buffer data for individual display units 108 and transmitting thereto.

The communication between individual display units 108 and particularly, between the main processing unit 102 and individual display units 108 is achieved through a virtual communication bus, as will now be explained.

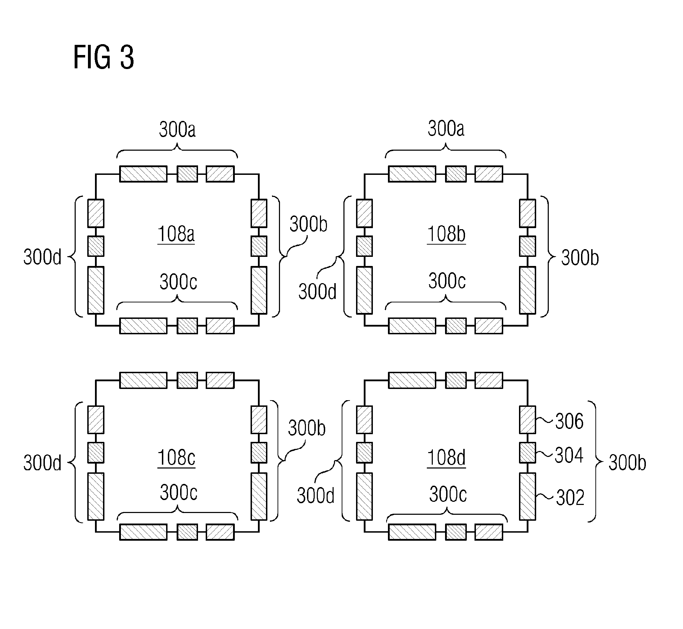

FIG 3 illustrates a schematic view of a flexi-grid interface provided on individual display units 108 in accordance with an embodiment of the present invention.

As shown in the adjoining figure, each display unit 108 is provided with multiple flexi-grid interfaces 300. Various display units 108 are operationally coupled through suitable flexi-grid interfaces 300. For example, display unit 108a and display unit 108b are operationally coupled through flexi-grid interfaces 300b and 300d provided therein respectively. It should be noted that the adjoining figure depicts an exemplary embodiment of the present invention in which each display unit 108 has four flexi-grid interfaces 300. In alternative embodiments of the present invention, the number of flexi-grid interfaces 300 provided in the individual display units 108 may be different.

As now understood, various display units 108 are interconnected through suitable flexi-grid interfaces 300 provided therein. The operational coupling between various display units 108 establishes a virtual communication bus spanning all the display units 108 interconnected to form the display panel 104. The virtual communication bus is adapted to enable transfer of the output data signal from the main processing unit 102 to various display units 108, and further to enable transfer of the input data signal received from various display units 108 to the main processing unit 102. As will now be explained.

Each flexi-grid interface 300 includes at least three logical ports namely a display data port 302, a command data port 304, and a power-line port 306.

The display data port 302 is adapted for transferring frame-buffer data (i.e. the output data signal) between two interconnected display units 108. The display data port 302 is also adapted for transferring frame-buffer data between the main processing unit 102 and a particular display unit 108 directly connected thereto.

Similarly, the command data port 304 is responsible to transmitting user inputs received through touch-sensitive display surface 202 or through other input modalities from any given display unit 108 back to the main processing unit 102.

The power-line port 306 is adapted for transfer of electrical energy between interconnected display units 108. In one exemplary embodiment of the present invention, the main processing unit 102 supplies the required electrical energy to all the display units 108 interconnected to form the display panel 104.

FIG 4 illustrates a schematic view of an auto configuration of the display panel 104 in accordance with an embodiment of the present invention.

The human-machine interface device 100 is configured such that during first start-up of the display panel 104 in a new arrangement of the display units 108, an auto configuration procedure is carried out to calibrate the display panel 104 such that a set of coordinates of each display unit 108 relative to the display panel 104 is identified. During auto configuration procedure, the centre point of each display unit 108 is highlighted. The calibration is required to address each of display unit 108 based on relative position thereof with respect to matrix or grid individual display units 108 interconnected to form the display panel 104.

During operation of the display panel 104, the frame-buffer data as well as the input data signal (through touch-sensitive display surface 202) is processed accordingly.

In one exemplary embodiment of the present invention, at the end of auto configuration procedure, each display unit 108 highlights the centre point thereof, hereinafter referred to as "hot-spot" for the user every time the address (x, y) is assigned thereto.

The following is an exemplary pseudo-code for achieving the same.
*1. start the calibration process*
   *a. set traverseDU = NULL and currDU = NULL*
   *b. Set the currDU as the first display unit receiving the signal from processing unit 102 (Generally one of the display units connected in the first column of the grid)*
*2. Repeat step 3 to 5*
*3. Get input from Orientation-Sensor(Accelerometer) (Orientation input is to decide which side of display unit interface is top* / *bottom as all the sides are having similar interfaces)*
*4. currDU = currDU. connTop. connectedDU*
*5. Until (currDU. connTop. connectedDU == NULL)*
   // *After step 5, current display unit is the top left display unit*
*6. For (nX = 1; (currDU. connRight. connectedDU != NULL) ; nX++)*
   *a. traverseDU = currDU*
   *b. For (nY = 1; (currDU.connDown.connectedDU != NULL); nY++)*
      *i. currDU. x = nX*
      *ii. currDU. y = nY;*
      *iii. Activate the hot-spot if (x, y) is set*
         *(this is to show the user, this display unit is calibrated)*
      *iv. currDU = currDU. connDown. connectedDU*
   *c. currDU = traverseDU.connRight.connectedDU*
*7. end of calibration*
   // *After step 7, all the display units are calibrated automatically*

In the above pseudo code, the following variables are used:
- connTop: a flexi-grid interface towards top of a given display unit (for example, flexi-grid interface 300a)
- connRight: a flexi-grid interface towards top of a given display unit (for example, flexi-grid interface 300b)
- connDown: a flexi-grid interface towards top of a given display unit (for example, flexi-grid interface 300c)
- connectedDU: a display unit connected to a specific interface (for example, for example, display unit 108d is the currDU.connDown.connectedDU when currDU is set to the display unit 108b)
- currDU: a display unit currently selected as per the pseudo code
- currDU.x: x co-ordinate of currDU
- currDU.y: y co-ordinate of currDU

As per the auto configuration procedure, as evident from the foregoing pseudo code, the key stages during the procedure are further explained below.

The main processing unit 102 sends a calibration signal to the display unit 108 which is directly interfaced thereto. On receiving the calibration signal, the display controller 206 sends a calibration signal to a flexi-grid interface 300 positioned towards a first direction. In one example, the first direction is towards a vertically top direction, that is, in case the display panel 104 is substantially oriented in a vertical plane. The display controller 206 coordinates with the orientation sensor 208 to determine the orientation of the display panel 104.

In case another display unit 108 is connected in the first direction, then the steps are repeated until there is no further display unit 108 connected in the first direction. Thus, the display controller 206 is able to determine the ultimate display unit 108 in the first direction, which in one example, turns out to be the top-most display unit 108.

Similar steps are performed to find the ultimate display unit 108 in a second direction. In one example, the second direction is towards left, that is, in case the display panel 104 is substantially oriented along the vertical plane.

After performing these steps, the display controller 206 is able to identify a reference display unit 108 that is assigned display coordinates as (1,1). In one example, the display unit 108 on the top-left is assigned these display coordinates.

It should be noted that various directions as mentioned in the foregoing paragraphs are only for the sake of explanation and in general, any suitable display unit 108 may be determined to be the reference display unit.

Subsequent to identifying the reference display unit, various other display units 108 are also assigned display coordinates relative to the reference display unit. Thus, all the display units 108 are assigned display coordinates based on their relative positions within the display panel 104.

As an example, the top left unit shall be addressed as (1, 1) and the unit connected to the right interface of (1, 1) shall be addressed as (1, 2) and so on. Similarly, the unit connected in the bottom interface shall be addressed as (2, 1) and so on. At the end of this addressing all the (m, n) units shall be addressed, where, m = number of rows in the grid; n = number of columns in the display panel 104 as illustrated in FIG 4.

Thus, at the end auto configuration procedure, all display units 108 are initialized with a set of display coordinates. This set of display coordinates are provided to the main processing unit 102. The main processing unit 102, in turn, uses the information related to the set of display coordinates while generating frame-buffer data and transmitting the same over the virtual communication bus.

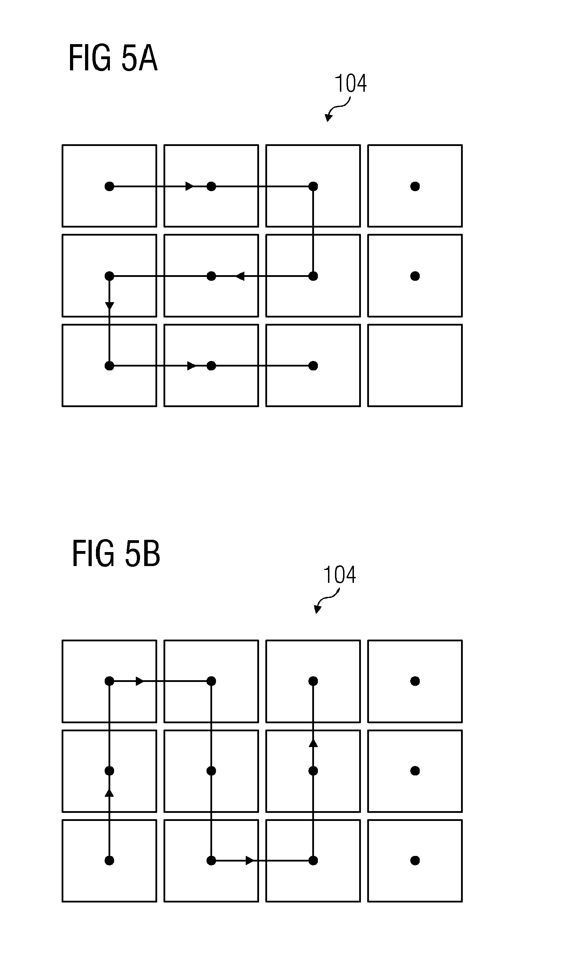

FIGS 5A and 5B illustrate a schematic view of a manual configuration of the display panel 104 in accordance with an embodiment of the present invention.

According to various techniques of the present invention, a user of the human-machine interface device 100 may also carry out a manual configuration procedure, which is explained in conjunction with the adjoining figures.

In the manual configuration procedure permits the user to decide the display order of the frame-buffer data. The default display order is based on auto configuration procedure as already explained in conjunction with the preceding figure. However, the user may change the display order to switch between different modes of display such as portrait, landscape and any other.

It should be noted that each display unit 108 is already assigned a set of display coordinates and will render frame-buffer data accordingly. Using manual configuration, the user is able to achieve an alternative arrangement of different display orders.

The pseudo code for manual configuration procedure is as provided below:
*1. DUFrameBuffer[noOfDUs] ; currFBPos = 1; (By default DUFrameBuffer[] is having Frame buffer position based on auto-calibration algorithm)*
*2.Repeat step 3 to step 4 (for every activated hot-spot)*
*3. Set currDU.frameBufferData = DUFrameBuffer[currFBPos] (The DU hot-spot currently in contact with the user is the currDU)*
*4. Increment currFPPos*
*5. End of calibration*

In this calibration, the user may select any pattern to decide the order of frame-buffer data to display. In case the user is not satisfied with a particular order, he or she may easily recalibrate the display panel 104 using the manual configuration procedure.

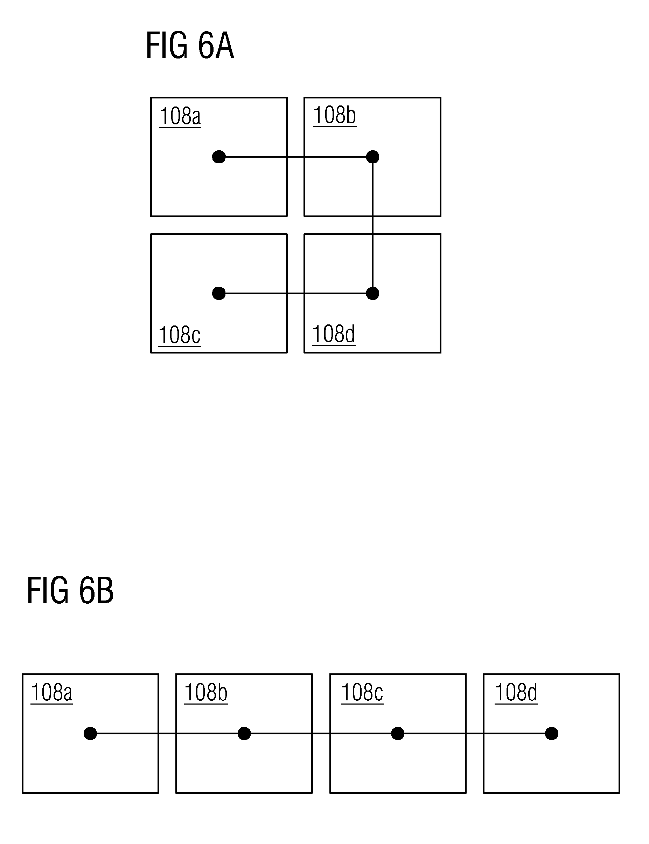

FIGS 6A and 6B provide schematic views of alternative arrangements of a given set of display panels. As evident from the figures, a 2x2 layout shown in FIG 6A is transformed to 1x4 layout shown in FIG 6B using manual configuration procedure.

In accordance with the foregoing description, the overall working principle of the human-machine interface device 100 in accordance with various exemplary embodiments of the present invention should be generally understood. The working principle is being summarized below for the purpose of better understanding.

The conventional human-machine interface device runtime is deployed on the main processing unit 102. The display controller 206 in each display unit 108 is configured for determining a set of display coordinates corresponding thereto relative to the display panel 104. The main processing unit 102 maintains information related to set of coordinates of each display unit 108 relative to the display panel 104. The runtime generates frame-buffer data for each display unit 108 and transmits the same over the virtual communication bus. The intended display unit 108, in particular, the display controller 206 therein, receives the frame-buffer data intended therefor and stores the same in the corresponding video random-access memory 204, which is eventually rendered onto the touch-sensitive display surface 202.

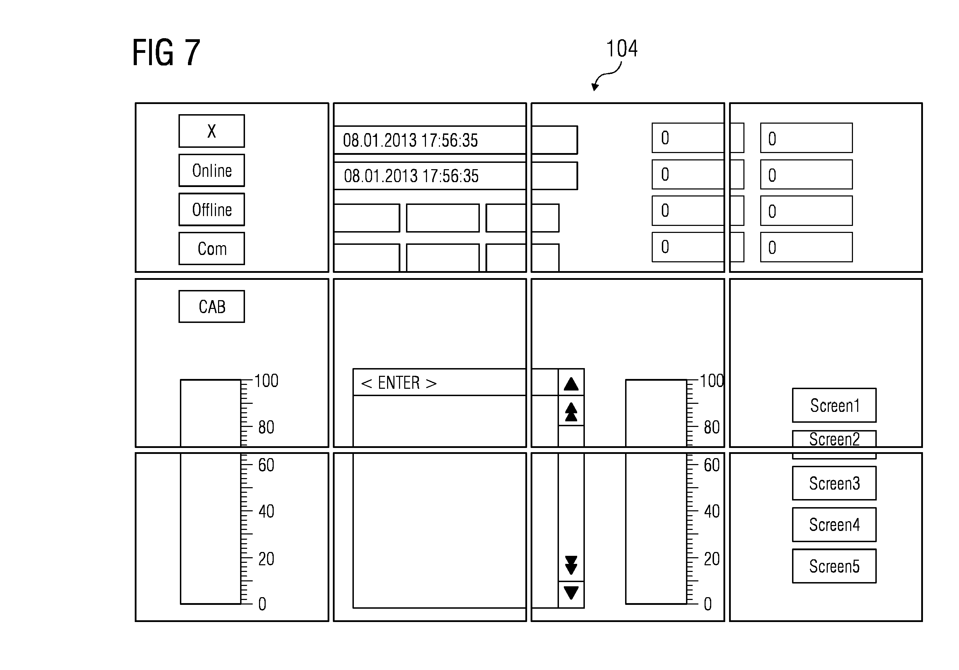

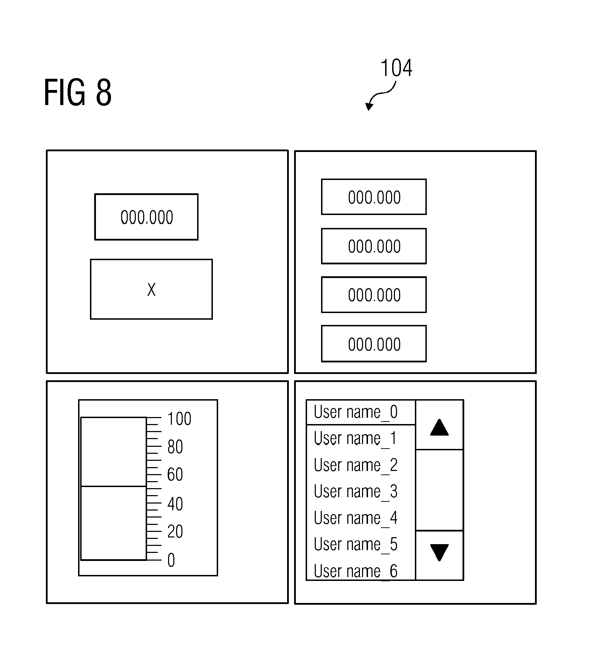

Referring now to FIG 7 and FIG 8, exemplary displays achieved using alternative configuration systems are shown. FIG 7 illustrates an exemplary view of a display panel configured using a legacy configuration system in accordance with an embodiment of the present invention. FIG 8 illustrates an exemplary view of a display panel configured using a transformation-enabled configuration system in accordance with an embodiment of the present invention.

As evident from FIG 7, when a legacy configuration system is used to develop the runtime application that is deployed on the main processing unit 102, the display on the display panel 104 may be segmented across different display units 108 in somewhat undesired manner.

To overcome this limitation, the present invention puts forth a transformation-enabled configuration system. In such configuration system, during the design time, a designer/developper is provided with a grid layout in a design/development environment. The designer/developer may populate different control elements on any given user-interface intended to be a part of the runtime application in accordance with the grid layout such that undesirable overlapping of various user interface components across different display units 108 is avoided.

In general, whether a legacy configuration system or transformation-enabled configuration system is used, the following sequence of steps is performed to set up a human-machine interface device as per various exemplary embodiments of the present invention.

As a first step, while configuring the project in the configuration system, the display panel grid size in RxC matrix is selected, where R is number of Rows; and C is number of Columns.

At a second step, various graphical elements are designed or arranged in the display panel grid based on user requirements. If it is desired to transform the layout to another arrangement, then the graphical elements should be arranged without overlapping on a grid layout provided in the design/development environment.

At a third step, one of flexi-grid interfaces provided on one of the display units is connected to the main processing unit 102 (or a legacy human-machine interface device). Further, a desired number of additional display units 108 are attached to the aforementioned display unit 108 to configure the display panel 104. The display panel 104 is supported on a fixed surface using mounting means 106.

At a fourth step, the display units 108 are activated based on auto configuration procedure.

At a fifth step, display sequence is configured based on user requirements as gathered through manual configuration procedure. This is an optional step.

The human-machine interface device 100 becomes ready for use.

Thus, the present invention provides a display panel suitable for use in human-machine interface devices. The present invention offers several advantages both for an organization as well as individual operators employed therein.

An organization may purchase any desired number of display units and to make deploy display panels of different sizes in different locations as desired. There is no need to switch to high-end expensive human-machine interface devices when a bigger display size is required in a particular location. The organization may simply use additional display units therefor. Thus, the cost of upgrade is substantially reduced. The individual display units that are interconnected to form the display panel are detachable, and thus the same set of display units may be used in several different configurations during different time intervals as per the requirements. The technique of the present invention addressing the requirements of varying display sizes is not only economical but environment friendly also. In most instances, while upgrading low-end human-machine interface devices to high-end human-machine interface devices, the legacy human-machine interface devices are discarded as electronic waste simply because a bigger display size is required. The present invention helps to avoid such unnecessary generation of electronic waste. It would be readily evident that the present invention further advantageously helps to upgrade low-end non-touch human-machine interface devices into touch-based human-machine interface devices without any significant investment provided the runtime application is suitable modified to enable processing of touch-based inputs.

The operator of the human-machine interface device is equally benefitted. The display size is dynamically configurable based on user requirements. The display panel can be arranged at different viewing angles due to use of flexi-joint arrangement. The flexibility of calibrating and transforming the human-machine interface device into various dimensions is also possible. The operator may use portrait, landscape, or any other mode of display after a simple manual configuration procedure. The operator can use the human-machine interface device of the present invention with a thin-client application to monitor other human-machine interface devices in a given network.

The present invention can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk, Current examples of optical disks include compact disk--read only memory (CD-ROM), compact disk--read/write (CD-R/W) and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would present themselves, to those of skill in the art without departing from the scope of various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A display panel (104) suitable for use with a human-machine interface device (102) comprising a plurality of display units (108), said plurality of display units (108) comprising at least a first display unit (108) and at least a second display unit (108), each of said display units (108) comprising a plurality of flexi-grid interfaces (302), wherein said first and said second display units (108) are operationally coupled through said flexi-grid interface (302) such that a virtual communication bus spanning said plurality of display units (108) is established, wherein said virtual communication bus is adapted to enable transfer of an output data signal from said human-machine interface device (102) to said first and said second display units (108), and further to enable transfer of an input data signal received from each of said first and said second display units (108) to said human-machine interface device (102).

2. The display panel (104) according to claim 1, wherein said operational coupling between said first and said second display units (108) through said flexi-grid interface (302) is further enables transfer of electrical energy there between.

3. The display panel (104) according to any of the preceding claims, wherein said display panel (104) is operationally coupled to said human-machine interface device (102) through said flexi-grid interface (302) of one of said plurality of display units (108) such as to enable transfer of input and output data signals and electrical energy there between.

4. The display panel (104) according to any of the preceding claims, wherein said display panel (104) is mounted on a mounting surface using a ball-and-socket assembly (110).

5. The display panel (104) according to any of the preceding claims, wherein each display unit (108) comprises:
- a touch-sensitive display surface (202),
- a video random-access memory (204) for storing frame-buffer data to be rendered onto said touch-sensitive display surface (202), and
- a display controller (206) for receiving said frame-buffer data from said human-machine interface device (102), and storing said frame-buffer data in said video random-access memory (204).

6. The display panel (104) according to claim 5, wherein said display controller (206) in each display unit (108) is configured for determining a set of display coordinates corresponding thereto relative to said display panel (104).

7. The display panel (104) according to claim 6, wherein said display controller (206) in each display unit (108) is further configured for providing information related to said set of display coordinates to said human-machine interface device (102).

8. A human-machine interface device (100), said human-machine interface device (100) comprising
- a main processing unit (102), said main processing unit (102) configured for generating one or more output data signals and further configured for receiving one or more input data signals,
- a display panel (104) comprising a plurality of display units (108), said plurality of display units (108) comprising at least a first display unit (108) and at least a second display unit (108), each of said display units (108) comprising a plurality of flexi-grid interfaces (302), wherein said first and said second display units (108) are operationally coupled through said flexi-grid interface (302) such that a virtual communication bus spanning said plurality of display units (108) is established, wherein said virtual communication bus is adapted to enable transfer of said output data signal from said main processing unit (102) to said first and said second display units (108), and further to enable transfer of said input data signal received from each of said first and said second display units (108) to said main processing unit (102).

9. The human-machine interface device (100) according to claim 8, wherein said operational coupling between said first and said second display units (108) through said flexi-grid interface (302) is further enables transfer of electrical energy there between.

10. The human-machine interface device (100) according to any of the preceding claims, wherein said display panel (104) is operationally coupled to said main processing unit (102) through said flexi-grid interface (302) of one of said plurality of display units (108) such as to enable transfer of said input and output data signals and said electrical energy there between.

11. The human-machine interface device (100) according to any of the preceding claims, wherein said display panel (104) is mounted on a mounting surface using a ball-and-socket assembly.

12. The human-machine interface device (100) according to any of the preceding claims, wherein each display unit (108) comprises:
- a touch-sensitive display surface (202),
- a video random-access memory (204) for storing frame-buffer data to be rendered onto said touch-sensitive display surface (202), and
- a display controller (206) for receiving said frame-buffer data from said human-machine interface device (100), and storing said frame-buffer data in said video random-access memory (204).

13. The human-machine interface device (100) according to claim 12, wherein said display controller (206) in each display unit (108) is configured for determining a set of display coordinates corresponding thereto relative to said display panel (104).

14. The human-machine interface device (100) according to claim 13, wherein said display controller (206) in each display unit (108) is further configured for providing information related to said set of display coordinates to said main processing unit (102).

15. The human-machine interface device (100) according to any of the preceding claims, wherein said main processing unit (102) is configured for generating frame-buffer data for individual display units (108) and transmitting thereto through said virtual communication bus.

## Amended claims

### Amended claims in accordance with Rule 137(2) EPC.

1. A display panel (104) suitable for use with a human-machine interface device (102) comprising a plurality of display units (108), **characterized in that**, each of said display units (108) comprises a plurality of flexi-grid interfaces (300), wherein said display units (108) are operationally coupled to each other through one of the corresponding flexi-grid interfaces (300) such that a virtual communication bus spanning said plurality of display units (108) is established, wherein said virtual communication bus is adapted to enable transfer of an output data signal from said human-machine interface device (102) to said display units (108), and enable transfer of an input data signal received from each of said display units (108) to said human-machine interface device (102).

2. The display panel (104) according to claim 1, wherein said operational coupling between said display units (108) through said flexi-grid interface (300) enables transfer of electrical energy there between.

3. The display panel (104) according to claims 1 and 2, wherein said display panel (104) is operationally coupled to said human-machine interface device (102) through one of flexi-grid interfaces (300) of at least one of said plurality of display units (108) such as to enable transfer of input and output data signals and electrical energy there between.

4. The display panel (104) according to any of the preceding claims 1 to 3, wherein said display panel (104) is mounted on a mounting surface using a ball-and-socket assembly (110).

5. The display panel (104) according to any of the preceding claims 1 to 4, wherein each display unit (108) comprises:
a touch-sensitive display surface (202),
a video random-access memory (204) for storing frame-buffer data to be rendered onto said touch-sensitive display surface (202),
a display controller (206) for receiving said frame-buffer data from said human-machine interface device (102), and storing said frame-buffer data in said video random-access memory (204), and
orientation sensor (208) for determining orientation of the display panel (104).

6. The display panel (104) according to claim 5, wherein said display controller (206) in said each display unit (108) is configured for determining a set of display coordinates corresponding thereto relative to said display panel (104).

7. The display panel (104) according to claim 6, wherein said display controller (206) in said each display unit (108) is configured for providing information related to said set of display coordinates to said human-machine interface device (102).

8. The display panel (104) according to claim 5, wherein each of the flexi-grid interfaces (300) in said each of the display units (108) comprises:
a display data port (302) adapted for transferring frame- buffer data to interconnected one or more of the display units (108),
a command data port (304) adapted for transmitting user inputs received through the respective touch-sensitive display surface (202), and
a power line port (306) adapted for transferring electrical energy to the interconnected one or more of the display units (108).

9. A human-machine interface device (100), said human-machine interface device (100) comprising:
a main processing unit (102), said main processing unit (102) configured for generating one or more output data signals and receiving one or more input data signals,
**characterized by**:
- a display panel (104) comprising a plurality of display units (108), each of said display units (108) comprising a plurality of flexi-grid interfaces (300), wherein said display units (108) are operationally coupled to each other through one of the corresponding flexi-grid interfaces (300) such that a virtual communication bus spanning said plurality of display units (108) is established, wherein said virtual communication bus is adapted to enable transfer of said output data signals from said main processing unit (102) to said display units (108), and enable transfer of said input data signals received from each of said display units (108) to said main processing unit (102).

10. The human-machine interface device (100) according to claim 9, wherein said operational coupling between said display units (108) through said flexi-grid interfaces (300) enables transfer of electrical energy there between.

11. The human-machine interface device (100) according to claims 9 and 10, wherein said display panel (104) is operationally coupled to said main processing unit (102) through one of said flexi-grid interfaces (300) of at least one of said plurality of display units (108) such as to enable transfer of said input and output data signals and said electrical energy there between.

12. The human-machine interface device (100) according to any of the preceding claims 9 to 11, wherein said display panel (104) is mounted on a mounting surface using a balland-socket assembly (110).

13. The human-machine interface device (100) according to any of the preceding claims 9 to 12, wherein each display unit (108) comprises:
a touch-sensitive display surface (202),
a video random-access memory (204) for storing frame-buffer data to be rendered onto said touch-sensitive display surface (202),
a display controller (206) for receiving said frame-buffer data from said human-machine interface device (100), and storing said frame-buffer data in said video random-access memory (204), and
orientation sensor (208) for determining orientation of the display panel (104).

14. The human-machine interface device (100) according to claim 12, wherein said display controller (206) in each display unit (108) is configured for determining a set of display coordinates corresponding thereto relative to said display panel (104).

15. The human-machine interface device (100) according to claim 13, wherein said display controller (206) in each display unit (108) is further configured for providing information related to said set of display coordinates to said main processing unit (102).

16. The human-machine interface device (100) according to claim 9, wherein said main processing unit (102) is configured for generating frame-buffer data for each of said display units (108) and transmitting thereto through said virtual communication bus.

17. The human-machine interface device (100) according to claim 13, wherein each of the flexi-grid interfaces (300) in said each of the display units (108) comprises:
a display data port (302) adapted for transferring frame-buffer data to interconnected one or more of the display units (108),
a command data port (304) adapted for transmitting user inputs received through the respective touch-sensitive display surface (202), and
a power line port (306) adapted for transferring electrical energy to the interconnected one or more of the display units (108).
